# EUROPÄISCHE PATENTANMELDUNG

(11) **EP 0 937 767 A2**
(43) Veröffentlichungstag der Anmeldung: **25.08.1999**
(21) Anmeldenummer: 99103337.4
(22) Anmeldetag: 20.02.1999
(51) Int. Cl.: C10L 1/02

(54) **Dieselkraftstoffsubstitut und Verfahren zu dessen Herstellung**

(30) Priorität: 21.02.1998 DE 19807519
(71) Anmelder: Ex-Rohr Center GmbH, 23936 Grevesmühlen (DE); Kramaschke, Volker Dr., 23546 Lübeck (DE)
(72) Erfinder: Kramaschke, Volker Dr., 23546 Lübeck (DE)
(74) Vertreter: Siewers, Gescha, Dr.

(57) **Zusammenfassung**

Die Erfindung betrifft Dieselkraftstoffsubstitute aus Altölen und -fetten, bestehend aus Methylestern von Fettsäuren mit einer überwiegenden Kettenlänge von C₁₀ bist C₂₄ mit einem Gehalt an ungesättigten Säuren von mindestens 40% und Verfahren zur deren Herstellung.

## Beschreibung

Die Erfindung betrifft Dieselkraftstoffsubstitute und Verfahren zu deren Herstellung.

Dieselkraftstoffe sind schwer entflammbare Gemische von flüssigen Kohlenwasserstoffen, die überwiegend aus Paraffinen mit Beimengungen von Olefinen, Naphthenen und aromatischen Kohlenwasserstoffen bestehen. Dieselkraftstoffe werden erhalten bei der Destillation von Erdöl aus dem sogenannten Gasöl, beim Cracken, aus Teeren, die bei der Schwelung oder Hydrierung von Braun- oder Steinkohlen anfallen, sowie auch durch Hydrierung des sogenannten Kohleextraktes.

Seit einigen Jahren wird die Verwendung von fetten Ölen, also nachwachsenden Rohstoffen, und hier insbesondere Rapsöl als Dieselersatz diskutiert. Zwischenzeitlich werden in geringeren Mengen Rapsölester als sogenannter "Biodiesel" verwendet. Rapsöl besteht aus den Triglyceriden von Ölsäure, Linolsäure, Linolensäure und Palmitinsäure sowie zu einem beträchtlichen Anteil aus Erucasäure und Elicosensäure. Die Verwendung von Rapsölestern als Dieseltreibstoff bedingt aber teilweise Umbauten an den bisher üblichen Motoren und ist, obgleich es sich um einen regenerativen Treibstoff handelt, noch relativ teuer.

Auf der anderen Seite stellen verdorbene oder aus anderen Gründen nicht mehr brauchbare Fette und Öle tierischer und pflanzlicher Herkunft ein Entsorgungsproblem dar. In den Klärwerken gelten die sogenannten Altöle und-fette als problematisch, und zwar insbesondere im anaeroben Milieu, da diese Stoffe schlecht abbaubar sind. Schon allein wegen der hohen CSB-Werte der Fette kann bei einer Fehldosierung das biologische System der Klärwerke leicht, d.h. auch irreversibel, überlastet werden. Viele Klärwerke verweigern daher prinzipiell die Annahme von Altfetten bzw. -ölen. Als Entsorgungsalternative hat sich in den letzten Jahren die Biogaserzeugung etabliert, in der Fette verwertet werden können. Allerdings sind Biogasreaktoren bei gemäßigten klimatischen Verhältnissen nur unter bestimmten Bedingungen einsetzbar und stellen daher für die Beseitigung von Altölen und -fetten keine tatsächliche Alternative dar. Altöle und -fette werden daher entweder auf Deponien gelagert oder der "thermischen Verwertung" zugeführt in Ölverbrennungsanlagen. Dies ist auf der einen Seite kostenintensiv und bedeutet auf der anderen Seite eine zunehmende Belastung von Deponieflächen und zusätzlichen Müllanfall.

Der Erfindung liegt somit die Aufgabe zugrunde, Altöle und -fette so weiter zu verarbeiten, daß sie als Dieselsubstitut einsetzbar werden.

Zur Lösung dieser Aufgabe werden Substitute vorgeschlagen, die aus den Methylestern von Fettsäuren mit einer überwiegenden Kettenlänge von C₁₀ bis C₂₄ bestehen, wobei der Gehalt an ungesättigten Säuren mindestens 40 % beträgt. Überraschenderweise hat sich herausgestellt, daß Altöle und -fette zu Dieselkraftstoffsubstituten verarbeitet werden können, und zwar zu konkurrenzfähigen Preisen, wobei Kraftstoffe anfallen, die ohne weiteres und ohne Umbauten an den vorhandenen Dieselmotoren mit nahezu gleichem Wirkungsgrad wie die üblichen Dieseltreibstoffe einsetzbar sind.

Als Ausgangsmaterial werden Altöle und Altfette pflanzlicher und tierischer Herkunft eingesetzt, wie beispielsweise Fett aus Fettabscheidern, gebrauchte Friteusenfette, gelagerte Speisefette, Fischöle, Fehlchargen von Nahrungsfetten u.ä., wobei die Öle und Fette von Haus aus oder durch Abbaumechanismen etwa 40 % ungesättigte Säuren enthalten sollten. In den Fällen, in denen die Altfette und Öle durch Mikroorganismen kontaminiert sind, wie beispielsweise dort, wo die Fette in längerem Kontakt mit Wasser stehen, wie beispielsweise Fettabscheiderinhalte, ist die Esterbindung der Triglyceride meist teilweise aufgebrochen. Mit zunehmenden Verderb bilden sich auch zunehmend kurzkettige Karbonsäuren wie Propion-, Butter- und Essigsäure. je nach Lagerbedingungen können auch oxidative Prozesse das Material zusätzlich verändern. Bei Alt- oder Abfallölen und -fetten handelt es sich also um ein sehr heterogenes Gemisch, dem bei der Aufarbeitung Rechnung zu tragen ist.

Eingesetzt werden können alle Altstoffe, die Triglyceride oder Fettsäure mit einer überwiegenden Kettenlänge zwischen C₁₀ bis C₂₄ enthalten. Da das Endprodukt eine wintertaugliche Flüssigkeit sein muß, muß der Anteil an ungesättigten Säuren je nach späterem klimatischen Einsatzgebiet mindestens 40 bis 70 % betragen. Bei Vorliegen von mehrfach ungesättigten Säuren können aber auch etwas größere Anteile an langkettigen gesättigten Säuren toleriert werden, so lange der Pourpoint der Mischung bei etwa 10 bis -20°C liegt, wobei der gewünschte Pourpoint abhängt von den klimatischen Gegebenheiten des Einsatzgebietes oder technischen Möglichkeiten wie Thermostatisierung des Treibstoffes. Die Jodzahl der Mischung sollte mindestens 42, vorzugsweise aber 80 bis 115 oder darüber betragen. Der Grenzwert der Filtrierbarkeit (Vornorm DIN V 51606) sollte je nach späterem klimatischen Einsatzgebiet 0 bis -30°C, für Mitteleuropa 0 bis -20°C betragen.

Falls Altfette und -öle mit Wasseranteilen von über 70 % das Ausgangsmaterial bilden, wird eine solche Mischung zunächst einige Stunden in einem Tank zur Phasentrennung stehen gelassen und anschließend die obere Schicht abgetrennt. Zur besseren Phasentrennung wird die Mischung vorzugsweise mit Schwefelsäure, Salzsäure, Phosphorsäure und/oder Eisen-III-chloridlösung angesäuert auf einen pH von etwa 4 bis 5. Die nach diesem Verfahrensschrift abgetrennten Mischungen oder Ausgangsaltfette und -öle mit einem Wasseranteil von etwa 40 bis 50 % werden mehrere Stunden auf etwa 60° C erhitzt. Hierbei findet eine Trennung in zwei oder mehr Phasen aufgrund der Dichteunterschiede statt, so daß sich die absetzenden Schlamm- und Wasserphasen abgetrennt und gesondert weiterverarbeitet und die fetthaltigen oberen Schichten abgezogen oder in anderer Weise durch Dekantieren oder Zentrifugieren entwässert werden können. Stehen geeignete Zentrifugen zur Verfügung, wird die Mischung auf etwa 90°C vorgewärmt und bei dieser Temperatur zentrifugiert. Die Verwendung von Zentrifugen ist besonders vorteilhaft, da meist ein von Begleitstoffen, insbesondere partikelförmigen, freies Fett erhalten und der Großteil des Wassers entfernt wird. Die Fettmischungen werden dann unter ständigem Rühren bei Normaldruck auf etwa 120°C bis 170°C langsam erwärmt. Bei Anlegen eines leichten Vakuum kann der Druck entsprechend gemindert werden. Dieser Verfahrensschritt ist notwendig, um flüchtige Bestandteile wie restliches Wasser und kurzkettige Karbonsäuren aus dem Gemisch zu entfernen. Die kurzkettigen Karbonsäuren können ggf. als Kondensat gewonnen werden. Sie werden anschließend alkalisiert, so daß das Wasser durch Erhitzen von den Salzen abgetrennt werden kann. Daran anschließend wird mit einer schwerflüchtigen Säure beispielsweise Phosphor- oder Schwefelsäure angesäuert, so daß die leichtflüchtigen Karbonsäuren dann durch Fraktionierung rein erhalten werden können.

Wenn wasserfreie, aber mit Feststoffpartikeln verunreinigte Fette bearbeitet werden sollen, werden diese Fette auf Temperaturen von 80 bis 120° C erwärmt und dann von den Feststoffen abfiltriert. Wasser- und partikelfreie Altfette und -öle mit heterogenen Verunreinigungen wie beispielsweise Eiweiß, Stärke, Phosphorlipide werden je nach Art der Verunreinigung mit Lösungsmitteln versetzt und erwärmt. Als Lösungsmittel können solche mit einem Siedepunkt zwischen 55 bis 120° C eingesetzt werden, wobei vorzugsweise Ketone, ggf. aber auch Alkohole oder Petrolether mit entsprechendem Siedepunkt Einsatz finden. Die Lösungsmittel sollten vorzugsweise in wasserfreier Form eingesetzt werden. Die optimale Lösungsmittelmenge ist abhängig von der Art des Fettes sowie vom Verschmutzungsgrad. Im allgemeinen beträgt die Lösungsmittelmenge das drei- bis fünffache der eingesetzten Fettmenge und ist so zu wählen, daß sich bei Beginn der Erwärmung eine möglichst klare Lösung neben dem ungelösten Bodensatz ergibt. Der Bodensatz wird dann durch Filtration in der Wärme abgetrennt und die Lösungsmittel werden destillativ entfernt und können erneut eingesetzt werden.

Diese so vorbereiteten Triglycerid- und/oder Fettsäuremischungen werden dann vorzugsweise einer Analyse zur Bestimmung der enthaltenen Fettsäuren unterzogen, damit ggf. vor der destillativen Weiterverarbeitung bereits ein zu hoher Anteil an langkettigen gesättigten Fettsäuren entfernt werden kann. Dazu werden die Fettmischungen in möglichst geringen Mengen Aceton oder eines anderen Keton mit einem Siedepunkt von unter 120°C in der Wärme gerade klar gelöst und dann auf unter 20°C, vorzugsweise etwa -10°C abgekühlt. Aus der vorher klaren Lösung scheiden sich dann Fettsäuren bzw. Triglyceride der langkettigen gesättigten Säuren ab und können durch Filtration entfernt werden. Die genaue Menge der tolerablen langkettigen Fettsäuren mit gesättigtem Charakter ist abhängig von der individuellen Charakteristik des Fettsäurespektrums und muß ggf. vor Erstellung größerer Esterchargen experimentell ermittelt werden.

Das gereinigte und ggf. durch Abkühlung und Filtration von einem Teil der langkettigen Säuren befreite Rohfett wird dann mit der zwei- bis fünffachen Menge wasserfreien Methanol versetzt und vorzugsweise ein saurer Katalysator wie beispielsweise 1 bis 2 Gew.-% Schwefelsäure in konzentrierter Form, bezogen auf die Fettmenge, zugefügt. Diese Reaktionsmischung wird dann einige Stunden, meist 12 bis 15 Stunden auf 20 bis 30°C oder auf Temperaturen zwischen etwa 50 bis 65° C unter Rückfluß erwärmt. Bei Temperaturen von 60 bis 64°C reicht beispielsweise eine Reaktionszeit von 1 bis 3 h. Die Vollständigkeit der Veresterung bzw. Umesterung wird in geeigneter Weise analytisch kontrolliert. Die Reaktion kann ggf. durch Zugabe von wasserbindenden Mitteln wie trockenen Molekularsieben, Kieselgelen, hochkonzentrierter Schwefelsäure usw. beschleunigt bzw. vervollständigt werden.

Nach Beendigung der Veresterungsreaktion kann die Mischung auf zwei verschiedenen Wegen aufgearbeitet werden, nämlich entweder durch Zugabe von äquimolaren Mengen nichtwässriger oder wässriger Base zur Neutralisation der Katalysatorsäure, woran anschließend überschüssiges Methanol und das Reaktionswasser bei Normaldruck oder in leichtem Vakuum destillativ entfernt werden. Bei einem Vakuum zwischen etwa 250 bis 50 mm Hg läßt sich die Temperatur bei der Destillation möglichst niedrig halten. Die Rückreaktion kann auf diese Weise weitgehend unterdrückt werden. Die Rohestermischung wird vorzugsweise dann durch Filtration vom Salz befreit und anschließend in an sich bekannter Weise bei einem Vakuum vom etwa 10 bis 1 mm Hg destilliert bzw. rektifiziert. Wird das Salz nicht vor der Destillation entfernt, verbleibt es im Sumpf.

Wenn die Fettmischung noch Triglyceride enthielt oder als Ausgangsmaterial Triglyceride eingesetzt werden, wird als zusätzliches Nebenprodukt Glycerin als Destillationsrückstand erhalten.

Die Rohestermischung kann aber auch nach dem Erkalten mit der fünf- bis zehnfachen Menge Wasser versetzt und unter pH-Kontrolle bis zum Erreichen des Neutralpunktes mit verdünnter Lauge neutralisiert werden. Nach Beendigung des Rührens scheidet sich auf der Methanol-, Wasser- und ggf. Glycerinphase der Rohester ab und kann abgezogen werden. Der Rohester wird dann, wie oben angegeben, destilliert bzw. rektifiziert.

Das bei der Aufarbeitung anfallende Wasser-Methanolgemisch mit geringen Anteilen Ester wird destillativ getrennt und der weiteren Verarbeitung wieder zugeführt.

Falls gewünscht und bisher noch nicht geschehen, können auch zum jetzigen Zeitpunkt aus der Methylestermischung noch die Ester mit langkettigen gesättigten Karbonsäuren entfernt werden, in dem die Mischung entweder kühl gelagert wird oder indem man sie in der Wärme in möglichst wenig Alkohol bzw. Keton löst und dann abkühlt, so daß sich die relativ schwer löslichen Palmitin- und Stearinsäuremethylester abscheiden und dann abfiltriert werden können.

Als Dieselkraftstoff werden je nach den Anforderungen entweder bestimmte Schnitte der Estermischung verwendet oder es können nach dem Rektifizieren auch Mischungen mit bestimmten Zusammensetzungen und damit entsprechend beeinflußbaren Eigenschaften hergestellt werden. Für die Wintertauglichkeit des Kraftstoffes ist es erforderlich, daß der Pourpoint bei etwa 10 bis -20°C liegt. Wenn die Estermischung einen hohen Anteil an mehrfach ungesättigten Säuren aufweist, kann auch der Anteil an gesättigten langkettigen Säuren relativ hoch sein. Falls Ölsäure überwiegt und deren Anteil unter 50 % liegt, müssen die langkettigen Säuren ggf., wie beschrieben, entfernt werden. In entsprechender Weise kann auch der Grenzwert der Filtrierbarkeit ja nach Anforderung eingestellt werden.

Bei Feldversuchen hat sich herausgestellt, daß die jetzt gebräuchlichen Dieselmotoren mit diesen aus Altfetten und -ölen gewonnenen Estermischungen problemlos funktionieren. Die Ester weisen mit Rapsölestern vergleichbare physikalische und chemische Eigenschaften auf hinsichtlich der Dichte im Bereich von etwa 0,90 und einer Jodzahl, die mindestens 40, vorzugsweise aber bis 115 oder darüber, betragen sollte. Die Jodzahl steigt beim entsprechend höheren Gehalt an mehrfach ungesättigten Säuren.

Die Erfindung wird im folgenden anhand eines Beispieles näher erläutert:

### Beispiel:

Altfett aus industriellen Fettabscheidern wird nach der Anlieferung in einen Absetztank eingebracht und kräftig durchmischt. Der Wassergehalt der Mischung beträgt etwa 70 Gew.-%. Zur Einstellung des pH-Wertes auf 4 wird die Mischung mit Schwefelsäure bis zu diesem Wert angesäuert. Nach dem Durchmischen wird die Masse zwecks Phasentrennung über Nacht stehen gelassen. Es ist vorteilhaft, wenn der Absetztank mit einer Kühlmöglichkeit ausgerüstet ist, um auch in der wärmeren Jahreszeit eine möglichst gute und schnelle Phasentrennung zu erreichen. In der kälteren Jahreszeit reicht die Umgebungstemperatur zum hinreichenden Kühlen aus.

Nach dem Absetzen der Fettschicht wird diese mit Hilfe eines Räumers abgetrennt. Die wässrige Phase wird abgezogen und getrennt entsorgt.

Die Fettmasse, die immer noch Wasser in Mengen von etwa 30 bis 60 Gew.-% enthält, wird nun in einem Reaktor unter ständigem Rühren bei Normaldruck langsam auf 60°C bis 90°C, wobei ein Teil des Wassers sich unten absetzt und abgezogen werden kann, und dann auf 120° C erwärmt. Dabei entweicht das noch enthaltene Wasser sowie flüchtige Säuren, die ggf. mit Hilfe von Lauge in einem Gaswäscher aufgefangen und weiterverarbeitet werden können. Die Masse wird etwa eine Stunde bei der angegebenen Temperatur belassen und dann noch heiß gefiltert, um partikelförmige Verunreinigungen zu entfernen.

Die Fettmasse wird dann unter Rühren mit der dreifachen Menge Methanol versetzt und gelöst. Die Lösung wird nach Zugaben von 1 Gew.-% konzentrierter Schwefelsäure, bezogen auf die Fettmenge, unter Normaldruck drei Stunden bei einer Temperatur von 50 bis 65° C unter Rückfluß erwärmt. Nach zwei und nach drei Stunden wird die Zusammensetzung der Lösung analytisch kontrolliert durch DC, GC oder HPLC und das Fettsäure- bzw. Esterspektrum bestimmt. Ggf. kann durch Zugabe von wasserbindenden Mitteln, wie trockenen Molekularsieben oder Kieselgele in Mengen von etwa 3 bis 5 % die Reaktion beschleunigt bzw. vervollständigt werden.

Nach Vervollständigung der Veresterung wird die Lösung zur Neutralisation der Katalysatorsäure mit einer äquimolaren Menge Natriumbikarbonat unter Rühren zersetzt. Daran anschließend wird die Lösung unter Anlegung eines Vakuums von etwa 250 mm Hg von überschüssigem Methanol und Reaktionswasser befreit. Die Temperatur sollte dabei vorzugsweise nicht über 50° C betragen, um die Rückreaktion in möglichst geringen Grenzen zu halten.

Die Rohestermischung wird dann durch Filtration vom gebildeten fettunlöslichen Natriumsulfat befreit und in eine Vakuumdestillationsanlage überführt. Die Destillation oder Rektifikation erfolgt dann beim Unterdruck von etwa 1 bis 10 mm Hg.

Der Destillationssumpf besteht aus sehr geringen Anteilen hochsiedender Fettsäuren oder deren Estern und Glycerin, das auf Wunsch getrennt aufgearbeitet werden kann.

Die Destillationsschnitte der Ester werden in möglichst geringen Mengen Methanol gelöst und gekühlt. Nach Abscheiden der Palmitin- und/oder Stearinsäuremethylester werden diese abfiltriert und das Lösungsmittel in Vakuum destillativ entfernt.

Die Esterschnitte sind ölige, etwas gelbliche Flüssigkeiten mit völlig neutralem Geruch.

## Patentansprüche

1. Dieselkraftstoffsubstitut, bestehend aus den Methylestern von Fettsäuren mit einer überwiegenden Kettenlängen von C₁₀ bis C₂₄, wobei der Gehalt an ungesättigten Säuren mindestens 40 % beträgt.

2. Dieselkraftstoffsubstitut, bestehend aus den Methylestern von Fettsäuren mit einer überwiegenden Kettenlänge von C₁₀ bis C₂₄, wobei der Gehalt an ungesättigten Säuren mindestens 70 % beträgt.

3. Dieselkraftstoffsubstitut nach Anspruch 1 oder 2, dadurch gekennzeichnet, daß der Pourpoint der Mischung zwischen 10 bis -20°C liegt.

4. Dieselkraftstoffsubstitut nach Anspruch 1 oder 2, dadurch gekennzeichnet, daß die Jodzahl mindestens 42 und vorzugsweise etwa 115 beträgt.

5. Dieselkraftstoffsubstitut nach Anspruch 1 oder 2, dadurch gekennzeichnet, daß der Grenzwert der Filtrierbarkeit zwischen etwa 0 bis-30°C liegt.

6. Verfahren zur Herstellung von Dieselkraftstoffsubstituten aus Altölen und -fetten, dadurch gekennzeichnet, daß
a) das Öl oder Fett, ggf. nach vorherigem Absetzen bei hohem Wassergehalt, auf etwa 80 bis 120° C unter Normaldruck erwärmt, ggf. filtriert und/oder mit einem Lösungsmittel aufgenommen, filtriert und vom Lösungsmittel wieder befreit und die Fettphase isoliert,
b) diese mit der etwa zwei- bis fünffachen Menge Methanol unter Normaldruck auf Temperaturen von 50 bis 65° C erwärmt,
c) dann unter leichtem Vakuum vom überschüssigen Methanol und Reaktionswasser abgetrennt
d) und die Reaktionsmischung dann im Vakuum destilliert oder rektifiziert wird.

7. Verfahren zur Herstellung von Dieselkraftsubstituten aus Altölen und-fetten, dadurch gekennzeichnet, daß
a) das Öl oder Fett, ggf. nach voherigem Absetzen bei hohem Wassergehalt, auf etwa 80 bis 120° C unter Normaldruck erwärmt, ggf. filtriert und/oder mit einem Lösungsmittel aufgenommen, filtriert und vom Lösungsmittel wieder befreit und die Fettphase isoliert,
b) diese mit der etwa zwei- bis fünffachen Menge Methanol auf Temperaturen von 50 bis 65° C unter Normaldruck erwärmt,
c) dann unter leichtem Vakuum vom überschüssigen Methanol und Reaktionswasser abgetrennt
d) und die Reaktionsmischung nach Erkalten auf Umgebungstemperatur mit der fünf- bis zehnfachen Menge Wasser versetzt, die Esterphase abgezogen und diese dann im Vakuum destilliert oder rektifiziert wird.

8. Verfahren nach Anspruch 6 oder 7, dadurch gekennzeichnet, daß im Schritt b) ein saurer Katalysator eingesetzt wird.

9. Verfahren nach Anspruch 6 bis 8, dadurch gekennzeichnet, daß als Katalysator Schwefelsäure eingesetzt wird.

10. Verfahren nach Anspruch 6 bis 9, dadurch gekennzeichnet, daß im Schritt c) bei Unterdruck, vorzugsweise etwa 250 bis 50 mm Hg Unterdruck gearbeitet wird.

11. .Verfahren nach Anspruch 6 bis 10, dadurch gekennzeichnet, daß im Schritt d) bei etwa 10 bis 1 mm Hg Unterdruck gearbeitet wird.

12. Verfahren nach Anspruch 6 bis 11, dadurch gekennzeichnet, daß der saure Katalysator nach Beendigung der Veresterung entfernt wird.

13. Verfahren nach Anspruch 6 bis 12, dadurch gekennzeichnet, daß im Schritt a) als Lösungsmittel solche mit einem Siedepunkt zwischen etwa 55 bis 120° C eingesetzt werden.

14. Verfahren nach Anspruch 6 bis 13, dadurch gekennzeichnet, daß Ketone eingesetzt werden.

15. Verfahren nach Anspruch 6 bis 14, dadurch gekennzeichnet, daß vor Schritt b) oder nach Schritt d) des Verfahrens ein Teil der gesättigten langkettigen Säuren oder Ester abgetrennt wird.

16. Verfahren nach Anspruch 6 bis 15, dadurch gekennzeichnet, daß die Abtrennung mit oder ohne Zusatz geringer Mengen von Lösungsmitteln durch Kühlen der Mischung und Entfernung der ausgeschiedenen Ester erfolgt.
